# EUROPÄISCHE PATENTSCHRIFT

(11) **EP 0 933 271 B1**
(45) Veröffentlichungstag und Bekanntmachung des Hinweises auf die Patenterteilung: **02.01.2004**
(21) Anmeldenummer: 98122531.1
(22) Anmeldetag: 30.11.1998
(51) Int. Cl.: B60T 7/10

(54) **Mit einer selbsttätigen Nachstelleinrichtung ausgestattete Handbremse für Kraftwagen**
Handbrake for motor vehicles equipped with an automatic adjusting device.
Frein à main muni d'un dispositif de rattrapage automatique pour véhicules automobiles

(30) Priorität: 11.01.1998 DE 19800603
(43) Veröffentlichungstag der Anmeldung: 04.08.1999
(73) Patentinhaber: ED. Scharwächter GmbH, 42855 Remscheid (DE)
(72) Erfinder: Küller, Axel, 94577 Winzer (DE); Kalckert, Hans-Peter, 42859 Remscheid (DE); Bode, Sven, 42855 Remscheid (DE); Braker, Ulf, 94491 Hengersberg (DE)
(74) Vertreter: Sparing, Rolf Klaus

(56) Entgegenhaltungen:
- WO-A-96/07569
- DE-A- 3 839 117
- DE-A- 3 900 174
- US-A- 5 718 308

## Beschreibung

Die Erfindung betrifft eine Handbremse nach dem Oberbegriff des Anspruchs 1.

Aus der Praxis bekannte mit einer selbsttätigen Nachstelleinrichtung ausgestattete Handbremsen zeichnen sich dadurch aus, daß das zu den Radbremsorganen führende Bremsseil an ein eine Nachstellscheibe bildendes umfangsverzahntes Scheibensegment angeschlossen ist, wobei die Nachstellscheibe zum Handbremshebel konzentrisch, jedoch von diesem unabhängig drehbar auf einer gemeinsamen Achse gelagert ist und wobei die Nachstellscheibe in einer Drehrichtung mit der Last einer durch eine Spiralfeder gebildeten Nachstellfeder beaufschlagt ist. Mit dem Handbremshebel ist die Nachstellscheibe bei derartig gestalteten Nachstelleinrichtungen jeweils vermittels einer durch eine Feder, insbesondere eine Schenkelfeder in Einrückrichtung beaufschlagte Mitnehmerklinke gekoppelt bzw. koppelbar, derart, daß die Mitnehmerklinke beim Anziehen der Handbremse und damit beim Verschwenken des Handbremshebels aus seiner Lösestellung heraus eine Koppelung des Handbremshebels mit der unfangsverzahnten Nachstellscheibe und damit eine Mitnahme des Bremsseiles bewirkt. Die Mitnehmerklinke ist hierbei beispielsweise als Kipphebel ausgeführt, welcher über seinen einen Hebelarm mit der Umfangsverzahnung des die Nachstellscheibe bildenden Scheibensegmentes und über seinen anderen Hebelarm mit einem an dem karosseriefesten Brückenträger ortsfest angeordneten Rückstellanschlag zusammenwirkt, derart, daß bei vollständig in die Lösestellung geschwenktem Handbremshebel dessen Koppelung mit der Nachstellscheibe aufgehoben wird und die Nachstellscheibe nunmehr ausschließlich unter dem Einfluß der sie beaufschlagenden Spiralfeder steht. Hierbei erfalgt die Koppelung des Handbremshebels mit einer Seilscheibe oder einer vergleichbaren Mitnahmeeinrichtung für das wenigstens eine Bremsseil über ein Rastengesperre, insbesondere eine federbelastete Klinke erfolgt, was zum einen eine gewisse Geräuschentwicklung beim Betätigen der Handbremse mit sich bringt und zum anderen einen verhältnismäßig hohen Herstellungsaufwand erfordert, da nur vergleichsweise kleine Toleranzen zugelassen werden können.

EP-A- 0 162749 beschreibt eine Nachstelleinrichtung, bei der ein an die Bremsseile angeschlossener, als einarmiger Hebel ausgebildeter Mitnehmer mit einer zu seiner Lagerung an einem gleichzeitig der Abstützung des Handbremshebels dienenden Träger konzentrischen Axialverzahnung ausgestattet ist und über diese unter der Beaufschlagung durch eine Druckfeder mit einer komplementär ausgebildeten an einer Seitenfläche des Handbremshebels angeordneten Axialverzahnung im überwindbaren Eingriff steht. Die den Mitnehmer und den Handbremshebel während des Anziehens des Handbremshebels im gegenseitigen Eingriff haltende Druckfeder ist dabei so ausgebildet und angeordnet, daß sie zugleich eine in Spannrichtung der Bremsseile gerichtete Drehkraft auf den Mitnehmer ausübt, derart, daß dieser infolge der Neigung der gegenseitigen Verzahnung von Handbremshebel und Mitnehmer bei in der Ruhestellung befindlichen Handbremshebel diesem gegenüber verstellt werden kann, falls ein Spiel im Bremssystem auftritt. Nachteilig ist an dieser einfachen Ausführungsform einer Nachstelleinrichtung, daß die einzige Feder zwei unterschiedliche Funktionen ausüben muß und daher bezüglich keiner der beiden Funktionen optimal ausgelegt werden kann und ferner, daß zu keinem Zeitpunkt eine völlig freigängige Nachstellung des Mitnehmers gegenüber dem Handbremshebel erreicht wird.

WO 96 07 569 A1 zeigt eine Handbremse für ein Kraftfahrzeug, bei der ein Handbremshebel schwenkbar um eine Achse an einem Trägerteil angeordnet ist, wobei eine an dem Handbremshebel angeordnete Feststellklinke und eine an dem Trägerteil angeordnete Verzahnung ein Feststellen des Handbremshebels gegenüber dem Trägerteil in einer beliebigen Position ermöglichen. An dem Handbremshebel ist eine Klinke mit einer Verzahnung um eine weitere Achse schwenkbar angeordnet, wobei die Klinke mit einer um die Achse schwenkbaren Seilscheibe mittels einer Außenverzahnung koppelbar ist. An der Seilscheibe ist ein Bremsseil angeordnet. Auf der Achse ist ferner eine Spiralfeder vorgesehen, wobei die Achse und die Spiralfeder mittels eines nicht rund ausgebildeten Schaftes unverdrehbar mit Lagerelementen der Achse verbunden ist. Das andere Ende der Spiralfeder ist mit einem Vorsprung der Klinke verbunden, wobei die Kraft der Spiralfeder derart gerichtet ist, daß die Klinke in Richtung der Außenverzahnung der Seilscheibe gedrückt wird und diese mit der Verzahnung in Eingriff steht. Beim Anziehen der Handbremse bildet die Klinke mit der Außenverzahnung eine Antriebsverbindung, wodurch die Seilscheibe verschwenkt wird, und das Bremsseil angezogen wird. In dem Trägerteil ist ferner eine Aussparung vorgesehen, in der ein durch eine Feder vorgespanntes Eingriffsmittel angeordnet ist, das mit einem Vorsprung der Klinke koppelbar ist. Das Eingriffsmittel und der Fortsatz der Klinke sind während der Betätigung des Handbremshebels zum Anziehen der Bremse außer Eingriff. Während des Ablegens des Handbremshebels kommen das Eingriffsmittel und der Fortsatz miteinander in Eingriff, wenn das Bremsseil eine Verlängerung erfahren hat, wobei das Eingriffsmittel die Klinke aus der Außenverzahnung löst, so daß die Seilscheibe aufgrund der Federkraft der Spiralfeder sich um die Achse entgegen der Bremsbetätigungsrichtung dreht, und somit die Verlängerung des Bremsseils wieder ausgleicht.

DE 38 39 117 A1 zeigt eine Handbremse für ein Kraftfahrzeug, bei der ein Handbremshebel um eine an einem Trägerteil angeordneten Schwenkachse schwenkbar gelagert ist, wobei der Handbremshebel mittels einer an dem Handbremshebel angeordneten Klinke und einer an dem Trägerteil angeordneten Verzahnung in einer beliebigen Stellung zu dem Trägerteil festgelegt werden kann. Ferner ist um die Schwenkachse eine Seilscheibe schwenkbar vorgesehen, wobei der Handbremshebel mittels einer um eine an dem Handbremshebel angeordneten Schwenkachse drehbaren und mittels einer Feder vorgespannten Klinke und einer an der Seilscheibe angeordneten Verzahnung koppelbar ist. Zudem ist an der Seilscheibe ein Bremsseil angeordnet. Beim Anziehen der Handbremse bildet die Klinke mit der Verzahnung eine Antriebsverbindung, wodurch die Seilscheibe verschwenkt wird, und das Bremsseil angezogen wird Eine Nachstellvorrichtung ist derart vorgesehen, daß in der Seilscheibe ein bogenförmiger Ausschnitt angeordnet ist, in dem mittels zweier Bolzen eine Rastvorrichtung führbar angeordnet ist, wobei die Rastvorrichtung aus zwei die Seilscheibe umgreifende und mittels der Bolzen verbundenen Wangen besteht, zwischen denen eine Sperrklinke mittels einer Feder auf die an der Seilscheibe angeordneten Verzahnung vorgespannt ist. Bei einer Verlängerung des Bremsseils stößt nun die Rastvorrichtung an ein an dem Trägerteil angeordneten Anschlagorgan an, wobei die Rastvorrichtung innerhalb des Ausschnitts und auf der Verzahnung verschoben wird. Wird nun der Handbremshebel in die Ruheposition zurück verschwenkt, stößt die Klinke an ein an dem Trägerteil angeordneten Endriegelungsorgan und löst sich aus der Verzahnung. Dadurch kann die Seilscheibe mittels einer an Bremsbacken angeordneten Rückstellfeder gegenüber dem Handbremshebel verschwenkt werden, wobei die Rasteinrichtung gegen einen an dem Handbremshebel angeordneten Anschlag anstößt, um die Verschwenkung der Seilscheibe zu begrenzen, so daß das Bremsseil die gewünschte Spannung aufweist.

DE 39 00 174 A1 zeigt eine Handbremse für ein Kraftfahrzeug, bei der ein Handbremshebel um eine an einem Trägerteil angeordneten Schwenkachse schwenkbar gelagert ist, wobei der Handbremshebel mittels einer an dem Handbremshebel schwenkbar angeordneten Klinke und einer an dem Trägerteil angeordneten Verzahnung in einer beliebigen Position festlegbar ist. Um die Schwenkachse ist drehbar eine Seilscheibe angeordnet, an der eine Ankopplungseinheit für ein Bremsseil vorgesehen ist. Die Seilscheibe weist eine Außenverzahnung auf, die mit einer an dem Handbremshebel um eine Achse schwenkbar angeordneten Klinke in Eingriff steht, wobei die Klinke von einer Schenkelfeder auf die Verzahnung vorgespannt ist. Beim Anziehen der Handbremse bildet die Klinke mit der Verzahnung eine Kupplung, wodurch die Seilscheibe verschwenkt wird, und das Bremsseil angezogen wird. Ferner ist an dem Brückenteil eine um eine Schwenkachse drehbare Klinke vorgesehen, wobei die Klinke mittels einer an dem Brückenträger abgestützten Schenkelfeder in Richtung der Verzahnung vorgespannt ist, und wobei ein an dem Handbremshebel angeordneter Steuemocken sowie eine Nockenbahn derart mit der Klinke gekoppelt ist, daß die Klinke erst nach einem vorbestimmten Betätigungswinkel des Handbremshebels freigegeben wird und mit der Verzahnung in Eingriff steht. Beim Zurückschwenken des Handbremshebels wird die Klinke mittels des Steuemockens außer Eingriff mit der Verzahnung der Seilscheibe gebracht. Dabei ist die Klinke mit der Verzahnung Eingriff und verhindert ein freies Zurückdrehen der Seilscheibe.

US 5,718,308 A zeigt eine Handbremse für ein Kraftfahrzeug, bei der ein Handbremshebel um eine an einem Trägerteil angeordneten Schwenkachse schwenkbar gelagert ist, wobei der Handbremshebel mittels einer an dem Trägerteil vorgesehenen Klinke und einem um die Achse angeordneten Sperrad in einer beliebigen Position festlegbar ist. Der Handbremshebel weist eine axiale Verzahnung auf, die mit einer axialen Verzahnung einer Kupplungsscheibe kuppelbar ist. Beim Anziehen der Handbremse wird der Handbremshebel mittels einer Ringfeder axial in Richtung der Kupplungsscheibe verschoben und die axialen Verzahnungen des Handbremshebels und der Kupplungsscheibe bilden eine Antriebsverbindung.

Es ist die Aufgabe der Erfindung eine Handbremse nach dem Oberbegriff des Anspruchs 1 zu schaffen, die ein sicheres Spannen und Lösen sowie ein selbsttätiges Nachstellen eines Bremsseils ermöglicht.

Diese Aufgabe wird bei der eingangs genannten Handbremse erfindungsgemäß mit den kennzeichnenden Merkmalen des Anspruchs 1 gelöst.

Die erfindungsgemäße Anwendung einer den Handbremshebel lediglich im Falle eines Anziehens der Handbremse mit der Mitnahmeeinrichtung für den Anzug der Bremsseile koppelnden Kupplung eröffnet die Möglichkeit die Mitnahmeeinrichtung ständig mit der Last einer Nachstellfeder zu beaufschlagen. mit der Wirkung einer ständigen Nachstellung, dahingehend. daß jedwedes Spiel innerhalb des Bremsbetätigungssystemes bei jedem Lösen der Handbremse durch Nachstellen sofort beseitigt wird. Die Trennung des Handbremshebels von der Mitnahmeeinrichtung für die Bremsseile kann zwar auf verschiedene Weisen erfolgen, jedoch bietet die erfindungsgemäß vorgesehene Anwendung einer in Abhängigkeit von der Betätigung des Handbremshebels selbsttätig einrückenden Trennkupplung eine besonders einfach zu realisierende und sicher arbeitende Möglichkeit eine normalerweise unterbrochene Verbindung zwischen Handbremshebel und Mitnahmeeinrichtung bzw. Bremsseil zur kontinuierlichen Nachstellung der Handbremse zu nutzen.

Die axial gerichtete Verzahnung kann im einfachsten Fall eine Klauenanordnung sein, zweckmäßigerweise ist jedoch eine Verzahnung im Sinne einer Riffelung vorgesehen, um einen möglichst stufenlosen Nachstelleffekt zu erhalten.

Zweckmäßigerweise ist dabei zwecks Verwirklichung einer möglichst kompakten Bauweise im Einzelnen weiter vorgesehen, daß der Handbremshebel und die Kupplungsscheibe sowie die Mitnahmeeinrichtung vermittels eines gemeinsamen Lagerteiles um eine gemeinsame Achse schwenkbar bzw. drehbar an dem den Handbremshebel lagernden Brückenträger abgestützt sind. wobei der Handbremshebel und die Kupplungsscheibe drehsicher miteinander gekoppelt sind. Insbesondere ist vorgesehen, daß das Lagerteil einen vielkantig, beispielsweise sechs-oder achtkantig, querschnittsprofilierten Längenabschnitt aufweist, welcher der drehsicheren Koppelung von Handbremshebel und Kupplungsscheibe dient und gleichzeitig eine exakt geführte, axial verschiebliche Abstützung der Kupplungsscheibe auf dem Lagerteil zuläßt.

Die Kupplungsscheibe ist dabei axial verschiebbar auf dem sie tragenden Lagerteil angeordnet und die einerseits gegen die ihrerseits in axialer Richtung gegen das wenigstens in seinen Endbereichen als Niet ausgebildete Lagerteil abgestützte Mitnahmeeinrichtung abgestützte Kupplungs-Ausrückfeder durch eine zwischen die Kupplungsscheibe und die Mitnahmeeinrichtung eingeschaltete Tellerfeder gebildet ist.

In weiterer vorteilhafter Ausgestaltung ist ferner vorgesehen, daß die der den Handbremshebel mit der Mitnahmeeinrichtung verbindenden formschlüssigen Kupplung zugeordnete Einrückeinrichtung aus einer Anzahl an der der Kupplungsscheibe zugewandten Seitenfläche bzw. Flankenfläche des den Handbremshebel und die Mitnahmeeinrichtung abstützenden Brückenträgers angeordneten Einrücknocken und einer entsprechenden Anzahl an der Rückseite der Kupplungsscheibe angeordneter, mit Anlauframpen bildenden Schrägen ausgestatteter Ausnehmungen besteht. Zweckmäßigerweise besteht der Brükkenträger aus einem Blechpressteil und dementsprechend sind die Einrücknocken durch einfache Durchdrückungen gebildet.

Insbesondere in Verbindung mit der Ausbildung der Einrücknocken der Einrückeinrichtung als einfache Durchdrückungen in der Seiten-bzw. Flankenfläche des Brückenträgers ergibt sich eine besonders vorteilhafte, weil kleinbauende Gestaltung der Kupplung weiter daraus, daß an der Flankenfläche des Brückenträgers in gleichmäßiger Verteilung um die den Handbremshebel abstützende Achse drei Einrücknocken ausgeprägt sind, welchen drei gleichfalls in gleichmäßiger Verteilung um die den Handbremshebel abstützende Achse angeordnete und in ihrer Grundrißform segmentförmige Vertiefungen in der Anlagefläche der Kupplungsscheibe zugeordnet sind.

Hinsichtlich der Ausübung einer ständig wirkenden Nachstellkraft auf die Mitnahmeeinrichtung ist erfindungsgemäß vorgesehen, daß eine als Spiralfeder ausgebildete Nachstellfeder einerseits an dem Lagerteil abgestützt ist und andererseits an der Mitnahmeeinrichtung angreift. Am Lagerteil kann die Nachstellfeder zweckmäßigerweise unter Verwendung einer Hülse oder dergl. Anschlußteils festgelegt sein.

Die Mitnahmeeinrichtung ist im einfachsten Falle durch einen einarmigen, frei drehbar auf dem Lagerteil gelagerten, in axialer Richtung jedoch gegen dieses abgestützten Hebel gebildet und bezüglich der als Spiralfeder ausgebildeten Nachstellfeder an der gegenüberliegenden Seite des Brückenträgers angeordnet. Die Nachstellfeder greift über einen radial gerichteten Belastungsarm am freien Ende des die Mitnahmeeinrichtung bildenden Hebels an. Im Einzelnen ist hierzu weiter vorgesehen, daß am freien Ende des die Mitnahmeeinrichtung bildenden Hebels ein Anschlußelement angeordnet ist, welches den als Flachmaterialzuschnitt ausgebildeten Hebel durchsetzt und einerseits ein für den Angriff des Belastungsarmes der die Nachstellfeder bildenden Spiralfeder geeignetes Lager sowie andererseits ein Anschlußelement für die Bremsseile bzw. ein mit diesen verbundenes Anschlußteil aufweist.

Die Erfindung ist in der nachfolgenden Beispielsbeschreibung anhand eines in der Zeichnung dargestellten Ausführungsbeispieles im Einzelnen beschrieben.

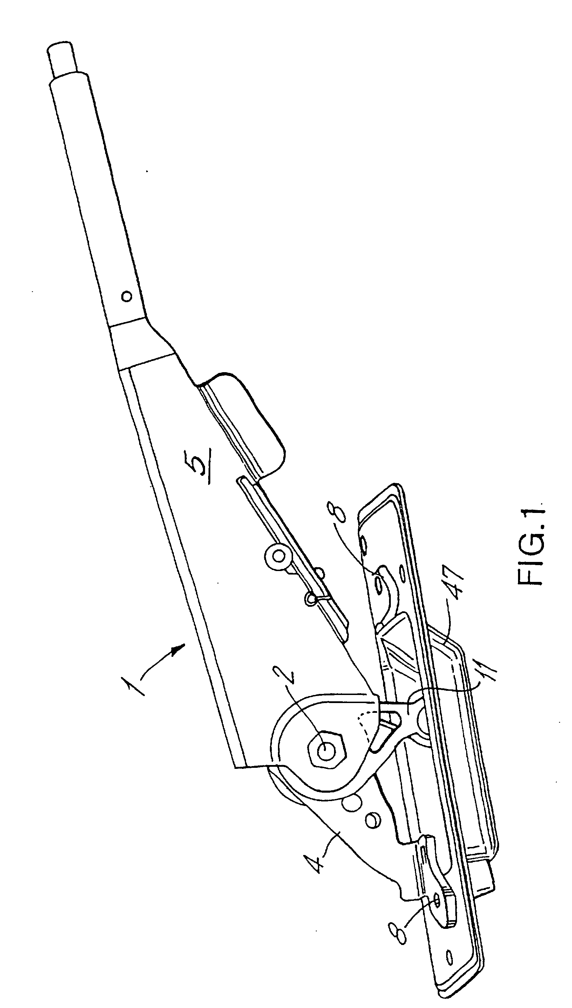

- Fig. 1: zeigt eine schematische schaubildliche Darstellung einer selbstnachstellenden Handbremse.

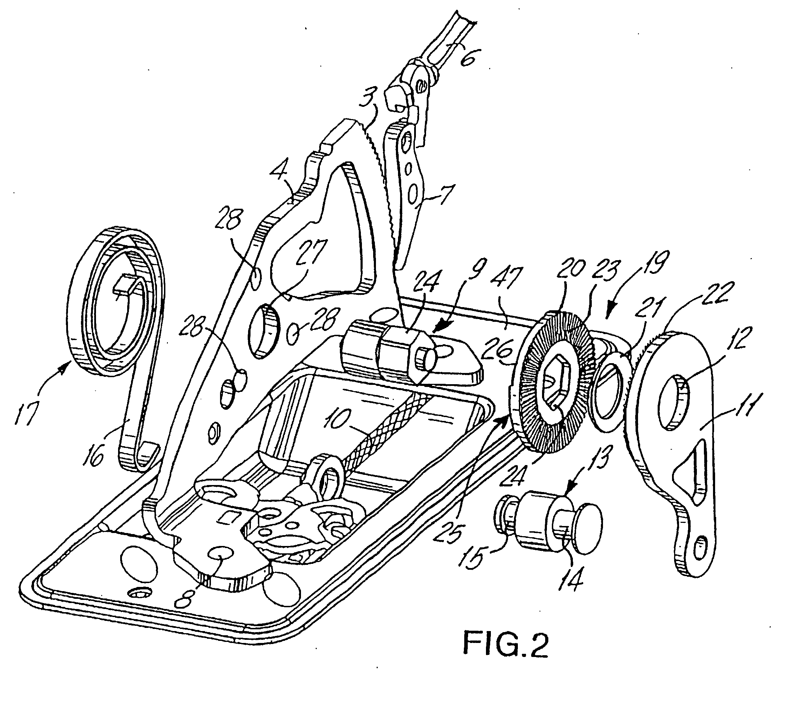

- Fig. 2: zeigt eine Explosionsdarstellung der selbstnachstellenden Handbremse nach Fig. 1, jedoch ohne Darstellung des Handbremshebels.
- Fig. 3: zeigt eine gleichfalls schaubildliche Einzeldarstellung der formschlüssigen Kupplung in der Handbremse gemäß Fig. 1 und 2 im vergrößerten Maßstab.
- Fig. 4: zeigt eine schaubildliche Einzeldarstellung der Kupplungsscheibe zur Kupplung nach Fig. 1 bis 3, gleichfalls im vergrößerten Maßstab.

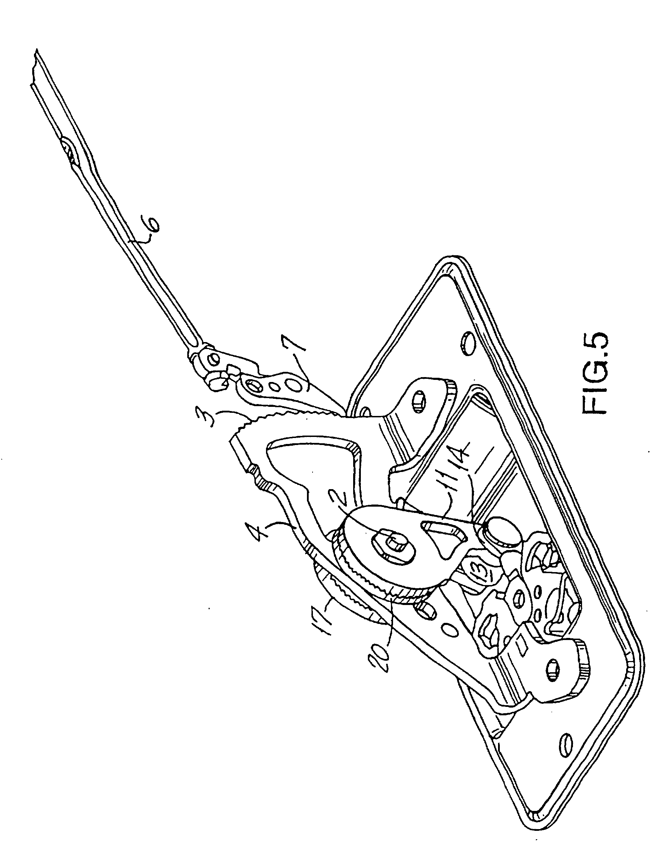

- Fig. 5: zeigt eine schematische schaubildliche Darstellung der selbstnachstellenden Handbremse im montierten Zustand.

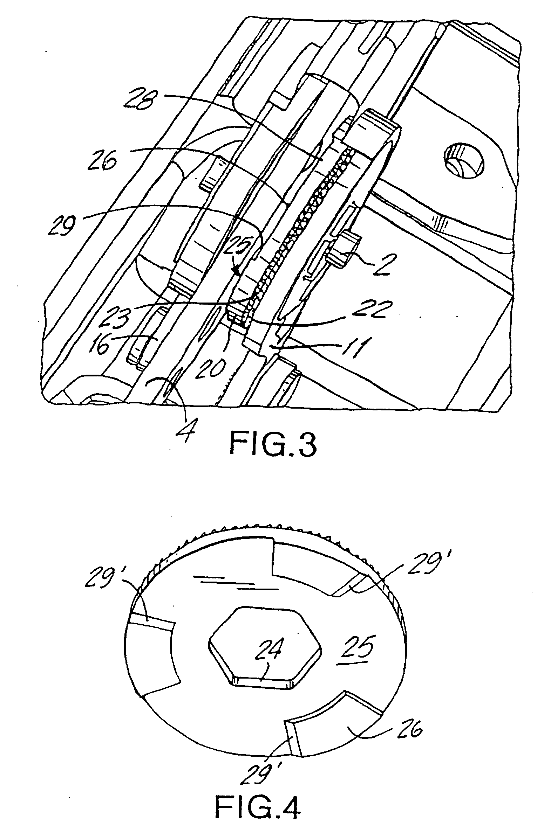

Die in der Zeichnung dargestellte, mit einer selbsttätigen Nachstelleinrichtung ausgestattete und im allgemeinen mit 1 bezeichnete Handbremse für Kraftwagen besteht im Wesentlichen aus einem um eine horizontale Achse 2 schwenkbar an einem mit einer radial gerichteten Verzahnung 3 ausgestatteten Brückenträger 4 gelagerten Handbremshebel 5, welcher vermittels einer über eine Betätigungsstange 6 willkürlich ausrastbaren Feststellklinke 7 in jeder beliebigen Anzugstellung am Brückenträger 4 festlegbar ist. Der Brückenträger 4 ist über Schraubenbolzen 8 mit einer Wanne 47 verschraubt und über diese mit der in der Zeichnung nicht näher dargestellten Fahrzeugkarosserie verbunden. Zusammen mit dem Handbremshebel 5, von diesem jedoch unabhängig drehbar, ist auf der durch ein Lagerteil 9 gebildeten Achse 2 ein eine Mitnahmeinrichtung für wenigstens ein Bremsseil 10 bildender einarmiger Hebel 11 gelagert. Der die Mitnahmeeinrichtung bildende Hebel 11 ist einerseits über eine Lagerbohrung 12 auf dem einen freien Ende des Lagerteiles 9 frei drehbar gelagert und ist andererseits mit einem Anschlußelement 13 ausgestattet, welches in einer Bohrungsausnehmung des als Flachmaterialzuschnitt ausgebildeten Hebels 11 durch Vernieten festgesetzt ist und einerseits einen Anschlußzapfen 14 für das Bremsseil 10, andererseits einen Ausleger 15 für den Angriff des Belastungsarmes 16 einer Nachstellfeder 17 aufweist. Die ständig auf den die Mitnahmeneinrichtung bildenden Hebel 11 wirkende Nachstellfeder 17 ist als Flachspiralfeder ausgebildet und vermittels eines Einspannarmes 18 und einer in der Zeichnung nicht näher dargestellten Hülse an dem die Achse 2 bildenden Lagerteil 9 festgelegt. Mit dem Handbremshebel 5 steht der die Mitnahmeeinrichtung bildende Hebel 11 vermittels einer beim Anziehen der Handbremse selbsttätig einrückenden, formschlüssigen Kupplung 19 in Antriebsverbindung. Die Kupplung 19 besteht im Wesentlichen aus einer axial verstellbaren Kupplungsscheibe 20, einer Kupplungs-Ausrückfeder 21 und einer zu dessen Lagerbohrung 12 konzentrisch angeordneten axial gerichteten Verzahnung 22 am Hebel 11. Der axial gerichteten Verzahnung 22 des die Mitnahmeeinrichtung bildenden Hebels 11 ist eine komplementär ausgebildete Verzahnung 23 der Kupplungsscheibe 20 zugeordnet. Die Kupplungsscheibe 20 ist vermittels einer Sechskantausnehmung 24 undrehbar aber axial verschiebbar auf einer entsprechenden Sechskantausbildung 24 des Lagerteiles 9 angeordnet, wobei der Handbremshebel 5 vermittels einer gleichfalls als Sechskantausbildung gestalteten, in der Zeichnung nicht im Einzelnen dargestellten, Anschlußausnehmung drehsicher auf dem Lagerteil 9 angeordnet ist, derart, daß jede Verschwenkbewegung des Handbremshebels 5 zwangsweise eine Verdrehbewegung der Kupplungsscheibe 20 zur Folge hat. Dem selbsttätigen und in Abhängigkeit von einer Anzugsbewegung des Handbremshebels 5 zwangsweisen Einrücken der bei in der Lösestellung befindlichem Handbremshebel 5 unter der Wirkung der als Tellerfeder ausgebildeten Kupplungs-Ausrückfeder 21 ausgerückten formschlüssigen Kupplung 22/23 ist eine aus an der Rückseite 25 der Kupplungsscheibe 20 angeordneten segmentförmigen axial gerichteten Ausnehmungen 26 und am Brückenträger 4 auf einer zur Lagerbohrung 27 für das Lagerteil 9 konzentrischen Kreisbahn angeordneten Einrücknocken 28 bestehende Einrückvorrichtung zugeordnet. Bei der gezeigten Ausführungsform sind, wie insbesondere aus der Fig. 4 ersichtlich, an der Rückseite 25 der Kupplungsscheibe 20 insgesamt drei über die Randzone hin gleichmäßig verteilt angeordnete segmentförmige Ausnehmungen 26 vorgesehen, welchen am Brückenträger 4 auf einer zur Lagerbohrung 27 konzentrischen Kreisbahn in gelchmäßigen gegenseitigen Abständen angeordnete, die Einrücknocken 28 bildende buckelförmige Durchdrückungen zuge ordnet sind. Um ein ruckfreies Einrücken der formschlüssigen Kupplung 22/23 zu gewährleisten, ist weiter vorgesehen, daß die segmentförmigen Ausnehmungen 26 an der Rückseite der Kupplungsscheibe 20 an wenigstens einem ihrer radial gerichteten Ränder mit einer eine Anlauframpe für die buckelförmigen Durchdrückungen 28 am Brückenträger 4 bildenden Abschrägung 29 versehen sind.
Wie insbesondere aus der Darstellung der Fig. 3 ersichtlich greifen die die Einrücknocken 28 bildenden buckelförmigen Durchdrückungen am Brückenträger 4 bei in der Lösestellung befindlichem Handbremshebel 5 in die segmentförmigen und axial gerichteten Ausnehmungen 26 an der Rückseite 25 der Kupplungsscheibe 20 ein, so daß die Kupplungsscheibe 20 durch die Kupplungs-Ausrückfeder 21 in einer Verschiebestellung gehalten werden kann, in welcher ihre axial gerichtete Verzahnung 23 mit der komplementären axial gerichteten Verzahnung 22 des die Mitnahmeeinrichtung bildenden Hebels 11 außer Eingriff ist. Mit Beginn einer in Anzugsrichtung gerichteten Schwenkbewegung des Handbremshebels 5 wird vermittels der Sechskantausbildung 24 zwangsweise auch die Kupplungsscheibe 20 verdreht, wodurch die die Einrücknocken 28 bildenden, buckelförmigen Durchdrückungen am Brückenträger 4 mit den Anlauframpen 29 an den segmentförmigen Ausnehmungen 26 an der Rückseite 25 der Kupplungsscheibe 20 in Überdeckung gelangen und entgegen der Wirkung der Ausrückfeder 21 eine axiale Verschiebung der Kupplungsscheibe 20 erzwingen, derart, daß deren axiale Verzahnung 23 mit der axialen Verzahnung 22 an dem die Mitnahmeeinrichtung bildenden Hebel 11 in formschlüssigen Eingriff gelangt und damit eine starre Koppelung des Handbremshebels 5 mit dem Hebel 11 hergestellt ist. Der gleiche Vorgang spielt sich beim Lösen der Handbremse in umgekehrter Richtung ab, so daß die Kupplung 22/23 bei in der Lösestellung befindlichem Handbremshebel 5 unter der Wirkung der Kupplungs-Ausrückfeder 21 ausgerückt und die Koppelung zwischen Handbremshebel 5 und Mitnahmeeinrichtung 11 aufgehoben wird und die auf die nunmehr frei drehbare Mitnahmeeinrichtung 11 wirkende Nachstellfeder 17 zur Beseitigung im Bremszug eventuell auftretenden Spieles den die Mitnahmeeinrichtung bildenden Hebel 11 in eine bezüglich eines erneuten Anziehens der Handbremse entsprechend verdrehte Ausgangsstellung bewegen kann.

## Patentansprüche

1. Mit einer selbsttätigen Nachstelleinrichtung ausgestattete Handbremse für Kraftwagen, bei welcher ein an einem mit einer Verzahnung (3) ausgestatteten Brückenträger (4) schwenkbar gelagerter Handbremshebel (5) vermittels einer willkürlich ausrastbaren Feststellklinke (7) in jeder beliebigen Anzugsstellung am Brückenträger (4) festlegbar ist, wobei der Handbremshebel (5) vermittels einer federbelasteten Kupplung (19) mit einem seinerseits gleichfalls am Brückenträger (4) gelagerten Hebel (11) für die Ankoppelung eines Bremsseils (10) kuppelbar ist, wobei die den Hebel (11) mit dem Handbremshebel (5) verbindende formschlüssige Kupplung (19) aus einer axial verzahnten Kupplungsscheibe (20) und einer an dem Hebel (11) ausgebildeten komplementären axialen Verzahnung (22) besteht, wobei der Handbremshebel (5) beim Anziehen der Handbremse aufgrund einer Einrückeinrichtung die Kupplung (19) mit dem Hebel (11) in formschlüssiger Antriebsverbindung steht, die bei Lösen der Handbremse durch eine Kupplungs-Ausrückfeder (21) wieder aufgehoben wird,
**dadurch gekennzeichnet,**
**daß** eine Nachstellfeder (17) vorgesehen ist, die einerseits an dem Brückenträger (4) festgelegt ist und andererseits den Hebel (11) und das am Hebel (11) angekoppelte Bremsseil spannt, wobei die Nachstellfeder (17) nur wirkt, wenn die Kupplungs-Ausrückfeder (21) die formschlüssige Antriebsverbindung aufgehoben hat.

2. Handbremse nach Anspruch 1, **dadurch gekennzeichnet, daß** der Handbremshebel (5) und die Kupplungsscheibe (20) sowie die Mitnahmeeinrichtung (11) vermittels eines gemeinsamen Lagerteils (9) um eine gemeinsame Achse (2) schwenkbar an dem Brückenträger (4) abgestützt sind, wobei der Handbremshebel (5) und die Kupplungsscheibe (20) drehsicher miteinander gekoppelt sind.

3. Handbremse nach Anspruch 2, **dadurch gekennzeichnet, daß** die Kupplungsscheibe (20) axial verschiebbar auf dem sie tragenden Lagerteil (9) angeordnet ist.

4. Handbremse nach Anspruch 2 oder 3, **dadurch gekennzeichnet, daß** die Nachstellfeder (17) als Spiralfeder ausgebildet ist, welche einerseits an dem Lagerteil (9) abgestützt ist und andererseits an der Mitnahmeeinrichtung (11) angreift.

5. Handbremse nach Anspruch 4, **dadurch gekennzeichnet, daß** die Mitnahmeeinrichtung durch einen einarmigen Hebel (11) gebildet ist, mit welchem die Nachstellfeder (17) über ein Anschlußelement (13) mit einem radial gerichteten Belastungsarm (16) in Eingriff steht.

6. Handbremse nach Anspruch 4 oder 5, **dadurch gekennzeichnet, daß** ein Anschlußelement (13), welches den als Flachmaterialzuschnitt ausgebildeten Hebel (11) durchsetzt, einerseits ein für den Angriff des Belastungsarmes (16) der Nachstellfeder (17) geeignetes Lager (15) sowie andererseits ein Lager (14) für die Bremsseile (10) aufweist.

7. Handbremse nach einem der Ansprüche 1 bis 6, **dadurch gekennzeichnet, daß** die Kupplungs-Ausrückfeder durch eine zwischen die Kupplungsscheibe (20) und die Mithahmeeinrichtung (11) eingeschaltete Tellerfeder (21) gebildet ist.

8. Handbremse nach einem der Ansprüche 1 bis 7, **dadurch gekennzeichnet, daß** die Einrückeinrichtung aus einer Anzahl an einer Flankenfläche des Brückenträgers (4) angeordneten Einrücknocken (28) und einer entsprechenden Anzahl an der Rückseite (25) der Kupplungsscheibe (20) angeordneter, mit Anlauframpen bildenden Schrägen (29) ausgestatteter Ausnehmungen (26) besteht.

9. Handbremse nach Anspruch 8, **dadurch gekennzeichnet, daß** an der Flankenfläche des Brückenträgers (4) in gleichmäßiger Verteilung um die den Handbremshebel (5) abstützende Achse (2) drei Einrücknocken (28) ausgeprägt sind, welchen drei (28) gleichfalls in gleichmäßiger Verteilung um die den Handbremshebel (5) abstützende Achse (2) angeordnete und in ihrer Grundrißform segmentförmige Ausnehmungen (26) in der Anlagefläche der Kupplungsscheibe zugeordnet sind.

10. Handbremse nach einem der Ansprüche 1 bis 9, **dadurch gekennzeichnet, daß** die Mitnahmeeinrichtung (11) und die Nachstellfeder (17) an einander gegenüberliegenden Seiten des Brückenträgers (4) angeordnet sind.

## Claims

1. A hand brake for cars equipped with a self-adjustment device, in which a hand brake lever (5) pivoted on a bridge-type support (4) equipped with toothing (3) can be fixed by means of a randomly engageable locking ratchet (7) in any tightening position on the bridge-type support (4), it being possible to couple the hand brake lever (5) by means of a spring-loaded coupling (19) to a lever (11) in turn also mounted on the bridge-type support (4) for the coupling of a brake cable (10), the positive coupling (19) connecting the lever (11) to the hand brake lever (5) consisting of an axially toothed transmission disk (20) and complementary axial toothing (22) constructed on the lever (11), upon tightening the hand brake the hand brake lever (5) being in positive drive communication with the lever (11) by virtue of an engaging device, which upon the release of the hand brake is disconnected again by a clutch release spring (31),
**characterised in that** an adjusting spring (17) is provided, which is firstly fixed to the bridge-type support (4) and secondly tensions the lever (11) and the brake cable coupled to the lever (11), the adjusting spring (17) only acting which the transmission release spring (21) has disconnected the positive driving connection.

2. A hand brake according to Claim 1,
**characterised in that** the hand brake lever (5) and the transmission disk (20) and also the slaving device (11) are supported on the bridge-type support (4) by means of a common bearing part (9) to swivel around a common axis (2), the hand brake lever (5) and the transmission disk (20) being coupled to each other in a rotationally secure manner.

3. A hand brake according to Claim 2,
**characterised in that** the transmission disk (20) is disposed in an axially displaceable manner on the bearing part (9) that supports it.

4. A hand brake according to Claim 2 or 3,
**characterised in that** the adjusting spring (17) is constructed as a spiral spring which is firstly supported on the bearing part (9) and secondly acts on the slaving device (11).

5. A hand brake according to Claim 4,
**characterised in that** the slaving device is formed by a single-armed lever (11) with which the adjusting spring (17) is engagement with a radially directly loading arm (16) via a connection element (13).

6. A hand brake according to Claim 4 or 5,
**characterised in that** a connection element (13), which passes through the lever (11) constructed as a flat material blank, firstly comprises a bearing (15) suitable for the action of the loading arm (16) of the adjusting spring (17) and also secondly a bearing (14) for the brake cables (10).

7. A hand brake according to one of Claims 1 to 6,
**characterised in that** the transmission release spring is formed by a disk spring (21) connected between the transmission disk (20) and the slaving device (11).

8. A hand brake according to one of Claims 1 to 7,
**characterised in that** the engaging device consists of a number of engaging cams (28) disposed on one side face of the bridge-type support (4) and a corresponding number of recesses (26) disposed on the rear (25) of the transmission disk (20) and equipped with slopes forming stopping ramps.

9. A hand brake according to Claim 8,
**characterised in that** stamped on the side face of the bridge-type support (4) and evenly distributed around the axis (2) supporting the hand brake lever (5) are three engaging cams (28), with which are associated three (28) recesses (26), also disposed distributed evenly around the axis (2) supporting the hand brake lever (5) and having a segment-shaped plan view in the bearing face of the transmission disk.

10. A hand brake according to one of Claims 1 to 9,
**characterised in that** the slaving device (11) and the adjusting spring (17) are disposed at mutually opposite sides of the bridge-type support (4).

## Revendications

1. Frein à main pour véhicules automobiles qui comporte un dispositif de réglage automatique et dans lequel un levier de frein à main (5) monté à pivotement sur un support en pont (4) doté d'un endentement (3) peut être immobilisé sur le support en pont dans une position de serrage quelconque au moyen d'un cliquet de blocage (7) pouvant être désengagé volontairement,
le levier de frein à main (5) pouvant être couplé au moyen d'un coupleur (19) contraint par ressort à un levier (11) monté de son côté également sur le support en pont (4) en vue de l'accouplement d'un câble de frein (10),
le coupleur (19) à verrouillage de forme, qui relie le levier (11) au levier de frein à main (5), se composant d'un disque d'accouplement (20) dentelé axialement et d'un endentement (22) axial complémentaire conformé sur le levier (11),
le levier de frein à main (5) réalisant grâce à un dispositif d'enclenchement une liaison d'entraînement par verrouillage de forme entre le coupleur (19) et le levier (11) lorsque l'on serre le frein à main, laquelle liaison est de nouveau supprimée lorsque le frein à main est desserré via un ressort d'accouplement et de désaccouplement (21),
**caractérisé en ce qu'**il est prévu un ressort de réglage (17) qui est fixé d'une part au support en pont (4) et qui contraint d'autre part le levier (11) et le câble de frein couplé au levier (11), le ressort de réglage (17) n'agissant que lorsque le ressort d'accouplement et de désaccouplement (21) a supprimé la liaison d'entraînement par verrouillage de forme.

2. Frein à main selon la revendication 1, **caractérisé en ce que** le levier de frein à main (5) et le disque d'accouplement (20) ainsi que le dispositif d'actionnement (11) sont supportés sur le support en pont (4) au moyen d'une pièce de palier commune (9) de façon à pouvoir pivoter autour d'un axe commun (2), le levier de frein à main (5) et le disque d'accouplement (20) étant couplés l'un à l'autre immobile en rotation.

3. Frein à main selon la revendication 2, **caractérisé en ce que** le disque d'accouplement (20) est disposé de façon à pouvoir se déplacer axialement sur la pièce de palier (9) qui le supporte.

4. Frein à main selon la revendication 2 ou 3, **caractérisé en ce que** le ressort de réglage (17) est conformé en ressort en spirale qui est d'une part supporté au niveau de la pièce de palier (9) et qui s'engage d'autre part avec le dispositif d'actionnement (11).

5. Frein à main selon la revendication 4, **caractérisé en ce que** le dispositif d'actionnement est formé par un levier à bras unique (11) qui vient en engagement avec un bras de contrainte (16) dirigé radialement du ressort de réglage (17) via un élément de raccordement (13).

6. Frein à main selon la revendication 4 ou 5, **caractérisé en ce qu'**un élément de raccordement (13), qui traverse le levier (11) conformé en pièce découpée de matériau plat, comporte d'une part un palier (15) approprié pour l'engagement du bras de contrainte (16) du ressort de réglage (17) et d'autre par un palier (14) destiné au câble de frein (10).

7. Frein à main selon l'une des revendications 1 à 6, **caractérisé en ce que** le ressort d'accouplement et de désaccouplement est formé par un ressort à disques (21) inséré entre le disque d'accouplement (20) et le dispositif d'actionnement (11).

8. Frein à main selon l'une des revendications 1 à 7, **caractérisé en ce que** le dispositif d'enclenchement se compose d'un certain nombre d'ergot d'enclenchement (28) disposés sur une surface de flanc du support en pont (4) et d'un nombre correspondant d'évidements (26) disposés au dos (25) du disque d'accouplement (20) et dotés de biseautages (29) formant des rampes d'avancement.

9. Frein à main selon la revendication 8, **caractérisé en ce que** trois ergots d'enclenchement (28) sont conformés sur la surface de flanc du support en pont (4) avec une distribution uniforme autour de l'axe (2) supportant le levier de frein à main (5), lesquels trois ergots d'enclenchement (28) sont disposés également avec une distribution uniforme autour de l'axe (2) supportant le levier de frein à main (5) et sont associés à des évidements (26) en forme de segments en projection horizontale.

10. Frein à main selon l'une des revendications 1 à 9, **caractérisé en ce que** le dispositif d'actionnement (11) et le ressort de réglage (17) sont disposés sur des côtés opposés l'un à l'autre du support en pont (4).
